# EUROPÄISCHE PATENTSCHRIFT

(11) **EP 2 065 615 B1**
(45) Veröffentlichungstag und Bekanntmachung des Hinweises auf die Patenterteilung: **15.02.2012**
(21) Anmeldenummer: 08020357.3
(22) Anmeldetag: 22.11.2008
(51) Int. Cl.: F16F 13/16, F16F 13/10

(54) **Hydraulisches Lager**
Hydraulic bearing
Support hydraulique

(30) Priorität: 29.11.2007 DE 102007057873
(43) Veröffentlichungstag der Anmeldung: 03.06.2009
(73) Patentinhaber: Carl Freudenberg KG, 69469 Weinheim (DE)
(72) Erfinder: Hettler, Werner, 68309 Mannheim (DE)

(56) Entgegenhaltungen:
- EP-A- 0 596 787
- DE-A1- 10 213 826
- US-A- 4 392 639
- US-A- 4 733 854
- US-A1- 2006 261 531

## Beschreibung

### Technisches Gebiet

Lager, umfassend ein Traglager und ein Auflager, wie im Oberbegriff des Anspruchs 1 definiert. Ein solches Lager ist aus der US-A-2006/0261531 bekannt.

### Stand der Technik

Derartige Lager sind z.B. ebenfalls aus der DE 102 13 826 bekannt. Das vorbekannte Lager weist ein Auflager auf, welches über eine Tragfeder mit einem Traglager verbunden ist. Das Auflager weist eine Sackbohrung auf, mittels derer das Auflager an einem Maschinenelement befestigbar ist. Bei der Montage von Motoren und Getrieben in Kraftfahrzeugen kann es erforderlich sein, die Montage des Lagers von der Fahrzeugunterseite vorzunehmen. Dabei müsste das Lager von der dem Auflager abgewandten Seite montiert werden, wobei insbesondere bei beengten Platzverhältnissen eine Befestigung mittels eines Flansches, bei dem Befestigungsmittel und Anschraubwerkzeug am Lager vorbeigeführt werden können, nicht möglich ist.

### Darstellung der Erfindung

Der Erfindung liegt die Aufgabe zugrunde, ein Lager zu entwickeln, welches auch bei beengten Platzverhältnissen einfach montierbar ist. Das Lager soll wenige und einfach gestaltete Bauteile aufweisen und einfach und kostengünstig herstellbar sein.

Diese Aufgabe wird durch die Merkmale von Anspruch 1 gelöst. Auf vorteilhafte Ausgestaltungen nehmen die Unteransprüche Bezug.

Das Traglager und der Verschlusskörper sind von einer sich im Wesentlichen axial in Richtung der eingeleiteten Schwingungen erstreckenden Durchbrechung durchdrungen.

Durch die Durchbrechung und der von außerhalb des Lagers zugänglichen Verschraubung ist es möglich, das Lager je nach Platzverhältnissen von beiden Seiten mit angrenzenden Maschinenelementen zu verbinden und das Lager kann einfach befestigt werden. Durch den flüssigkeitsdichten Verschlusskörper kann der Hohlraum trotz der durch den Verschlusskörper zugänglichen Verschraubung mit einer Dämpfungsflüssigkeit befüllt werden, um eine besonders gute Schwingungsdämpfung zu erzielen. Die Tragfeder kann je nach Anforderung oder Belastung kegelstumpfförmig oder quaderförmig ausgebildet sein. Das Lager weist wenig und einfach gestaltete Bauteile auf und ist daher einfach und kostengünstig herstellbar.

Die Durchbrechung und die Schraube können konzentrisch im Auflager angeordnet sein. Durch die konzentrische Anordnung ergibt sich eine besonders platzsparende Möglichkeit der Befestigung des Lagers. Die konzentrische Anordnung ermöglicht eine besonders gute Kraftübertragung vom Lager auf angrenzende Maschinenelemente.

Der Hohlraum umfasst einen Arbeits- und Ausgleichsraum, die mit Dämpfungsflüssigkeit gefüllt und flüssigkeitsleitend miteinander verbunden sind. Zur Dämpfung der Schwingungen wird die Flüssigkeitssäule zwischen dem Arbeits- und Ausgleichsraum gegenphasig zu den eingeleiteten Schwingungen hin- und hergepumpt.

Der Arbeits- und Ausgleichsraum sind durch einen Dämpfungskanal flüssigkeitsleitend miteinander verbunden. Durch den Dämpfungskanal können großamplitudige und tieffrequente Schwingungen gedämpft werden.

Der Dämpfungskanal ist im Traglager angeordnet. Daraus ergibt sich ein platzsparender Aufbau der Dämpfungseinrichtung. Die Formgebung des Dämpfungskanals kann einfach und kostengünstig gemeinsam mit der Herstellung des Traglagers erfolgen.

Der Verschlusskörper kann durch ein Elastomer-Metall-Verbundteil gebildet sein. Der Verschlusskörper kann dabei in einen Bereich hoher Elastizität und in einen Bereich hoher Festigkeit, bei gleichzeitiger Dichtheit, beispielsweise im Befestigungsbereich aufgeteilt sein. Der Bereich hoher Elastizität ist durch die ausschließliche Verwendung elastomerer Werkstoffe und der Befestigungsbereich durch einen Verbund aus Elastomer und Metall gekennzeichnet. Der Bereich hoher Elastizität erlaubt einen guten Kompromiss zwischen Dämpfung und akustischer Entkopplung.

Der Verschlusskörper kann einen Rollbalg aus elastomerem Werkstoff umfassen, der den Ausgleichsraum auf der dem Traglager abgewandten Seite begrenzt und im Wesentlichen drucklos Volumen aufnehmend ausgebildet ist. Durch den Rollbalg kann sich das Volumen des Ausgleichsraums vergrößern, um umströmende Flüssigkeit des Arbeitsraums aufnehmen zu können.

Das Traglager kann auf einem Gehäuse abgestützt sein. Das Gehäuse schützt den aus Elastomer und Metall gebildeten Verschlusskörper, insbesondere den ausschließlich durch ein Elastomer gebildeten Rollbalg.

Das Traglager kann mit dem Gehäuse verschraubt und/oder durch umbördeln des Gehäuserandes mit dem Traglager verbunden sein. Die Verschraubung kann gleichzeitig als Befestigungsmittel des Traglagers mit einem angrenzenden Maschinenelement ausgebildet sein. Die Verbindung ist einfach und kostengünstig herstellbar und leicht lösbar. Durch das Umbördeln ergibt sich eine stabile und preiswerte Verbindung. Das Gehäuse kann sich bei Transport und Montage nicht versehentlich lösen.

In dem Gehäuse kann eine zur Durchbrechung konzentrisch angeordnete Gehäusedurchbrechung angeordnet sein. Dadurch ist die Verschraubung des Traglagers auch bei montiertem Gehäuse beidseitig erreichbar.

Die Gehäusedurchbrechung kann als Lagermutter ausgebildet sein. Mit der Lagermutter wird ein Befestigungsmittel bereitgestellt, durch das das Gehäuse und das mit dem Gehäuse verbundene Traglager gleichzeitig an einem weiteren Maschinenelement befestigbar sind. Die Durchbrechung des Traglagers bleibt dabei durch die Lagermutter hindurch erreichbar.

### Kurzbeschreibung der Zeichnung

Einige Ausführungsbeispiele des erfindungsgemäßen Lagers werden nachfolgend anhand der Figuren näher erläutert. Es zeigen, jeweils in schematischer Darstellung:
Fig. 1 das erfindungsgemäße Lager in geschnittener Darstellung;
Fig. 2 das Lager mit einem Gehäuse, welches eine Lagermutter aufweist;
Fig. 3 das Lager mit einem Gehäuse mit Befestigungsschrauben;
Fig. 4 das Lager mit einem mit dem Auflager verschraubten Gehäuse.

### Ausführung der Erfindung

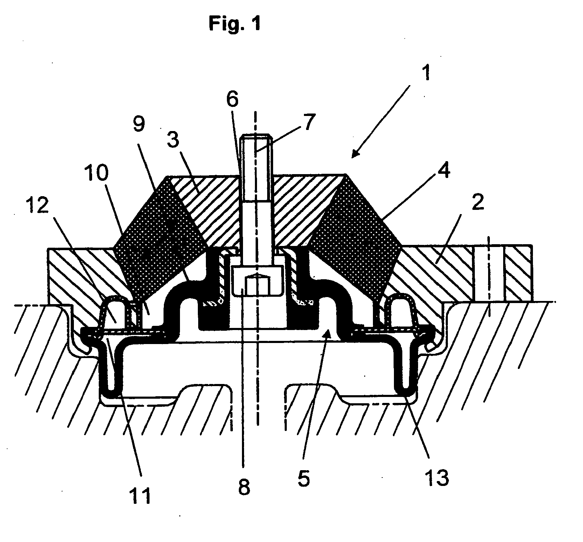

Figur 1 zeigt ein Lager 1, welches ein Traglager 2 und ein Auflager 3 aufweist, die in dieser Ausgestaltung durch eine kegelstumpfförmig ausgebildete Tragfeder 4 aus gummielastischem Werkstoff miteinander verbunden sind und einen im Wesentlichen dachförmigen Hohlraum 5 begrenzen. In anderen Ausführungen sind auch quaderförmig ausgebildete Tragfedern 4 denkbar. Der Hohlraum 5 ist auf der dem Auflager 3 axial abgewandten Seite durch einen Verschlusskörper 9 aus elastomerem Werkstoff flüssigkeitsdicht verschlossen. Der Verschlusskörper 9 ist aus einem Elastomer-Metall-Verbundteil gebildet. Das Traglager 2 und der Verschlusskörper 9 sind von einer sich axial in Richtung der eingeleiteten Axial-Schwingungen erstreckenden Durchbrechung 6 durchdrungen, wobei die Durchbrechung 6 konzentrisch im Auflager 3 angeordnet ist. Im Bereich der Durchbrechung 6 ist der Verschlusskörper 9 durch Metall-Einlagen verstärkt. In der Durchbrechung 6 ist eine Schraube 7 mit Schraubenkopf 8 angeordnet, mittels derer das Lager 1 an einem (nicht dargestellten) Maschinenelemente befestigt wird. Die Schraube 7 ist vom Hohlraum 5 aus mit einem Montagewerkzeug erreichbar. Dadurch ist eine Montage des Lagers beispielsweise von der Fahrzeugunterseite her möglich. Das Traglager 2, das Auflager 3, die Tragfeder und der Verschlusskörper begrenzen einen mit Dämpfungsflüssigkeit gefüllten Raum, der in einen Arbeits- 10 und einen Ausgleichsraum 11 aufgeteilt ist. Arbeits- 10 und Ausgleichsraum 11 sind flüssigkeitsleitend durch einen Dämpfungskanal 12 miteinander verbunden. Der Dämpfungskanal 12 ist dabei im Traglager 2 angeordnet. Als Begrenzung des Ausgleichsraums 11 weist der Verschlusskörper 9 einen Rollbalg 13 aus elastomerem Werkstoff auf. Durch den Rollbalg 13 kann der Ausgleichsraum drucklos Volumen aufnehmen.

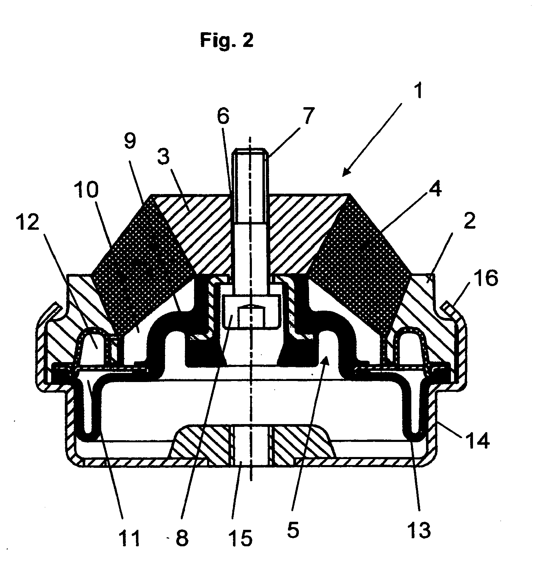

Figur 2 zeigt ein Lager gemäß Figur 1, wobei das Traglager 2 auf einem Gehäuse 14 abgestützt ist. Das Gehäuse 14 ist durch Umbördeln des Gehäuserandes 16 mit dem Traglager 2 verbunden. Das Gehäuse 14 weist zur Montage des Lagers 1 eine zur Durchbrechung 6 konzentrisch angeordnete Gehäusedurchbrechung 15 auf. Zur Befestigung des Gehäuses 14 und damit des Traglagers 2 weist das Gehäuse 14 eine Lagermutter 15 auf, die gleichzeitig die Gehäusedurchbrechung 15 bildet.

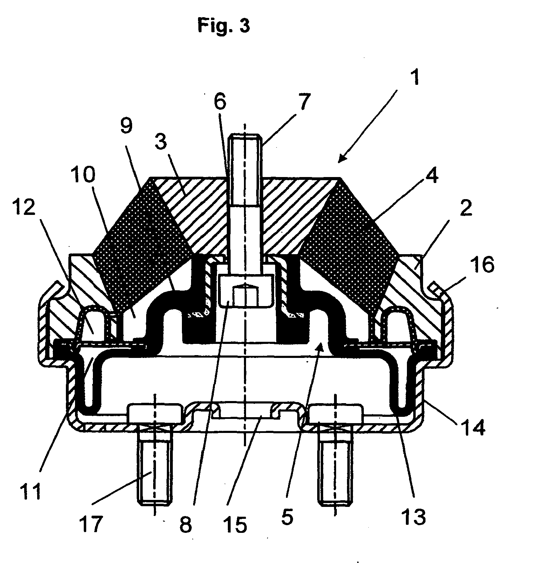

Figur 3 zeigt ein Lager gemäß Figur 1, wobei das Traglager 2 auf einem Gehäuse 14 abgestützt ist. Das Gehäuse 14 ist durch Umbördeln des Gehäuserandes 16 mit dem Traglager 2 verbunden. Das Gehäuse 14 weist zur Montage des Lagers 1 eine zur Durchbrechung 6 konzentrisch angeordnete Gehäusedurchbrechung 15 auf. Zur Befestigung des Gehäuses und damit des Traglagers 2 weist das Gehäuse 14 eine Anzahl von Befestigungsschrauben 17 auf, die drehfest mit dem Gehäuse 14 verbunden sind.

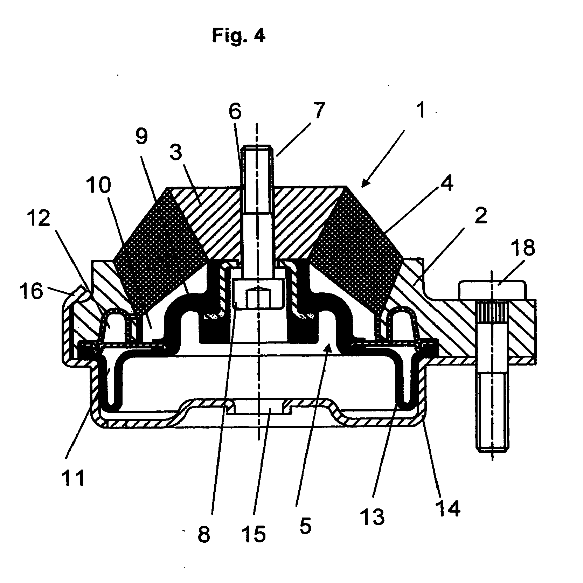

Figur 4 zeigt ein Lager gemäß Figur 1, wobei das Traglager 2 auf einem Gehäuse 14 abgestützt ist. Das Gehäuse 14 ist mittels der Schraubverbindung 18 mit dem Traglager 2 verbunden. Die Schraubverbindung 18 dient gleichzeitig der Verbindung des Lagers 1 mit angrenzenden Maschinenelementen (nicht dargestellt). Das Gehäuse 14 weist zur Montage des Lagers 1 eine zur Durchbrechung 6 konzentrisch angeordnete Gehäusedurchbrechung 15 auf.

## Patentansprüche

1. Lager (1), umfassend ein Traglager (2) und ein Auflager (3), die durch eine Tragfeder (4) aus gummielastischen Werkstoff miteinander verbunden sind und einen Hohlraum (5) begrenzen, der auf der dem Auflager (3) axial abgewandten Seite durch einen Verschlusskörper (9) aus elastomerem Werkstoff flüssigkeitsdicht verschlossen ist, wobei das Traglager (2) und der Verschlusskörper (9) von einer sich im wesentlichen axial in Richtung der eingeleiteten Schwingungen erstreckenden Durchbrechung (6) durchdrungen sind, **dadurch gekennzeichnet, dass** der Hohlraum (5) einen Arbeits- (10) und Ausgleichsraum (11) umfasst, die mit Dämpfungsflüssigkeit gefüllt und durch einen im Traglager (2) angeordneten Dämpfungskanal (12) flüssigkeitsleitend miteinander verbunden sind.

2. Lager nach Anspruch 1, **dadurch gekennzeichnet, dass** die Durchbrechung (6) konzentrisch im Auflager (3) angeordnet ist.

3. Lager nach einem der Anspruch 1 oder 2, **dadurch gekennzeichnet, dass** der Verschlusskörper (9) zumindest teilweise aus elastomerem Werkstoff besteht.

4. Lager nach einem der Ansprüche 1 bis 3, **dadurch gekennzeichnet, dass** der Verschlusskörper (9) durch ein Elastomer-Metall-Verbundteil gebildet ist.

5. Lager nach einem der Ansprüche 1 bis 4, **dadurch gekennzeichnet, dass** der Verschlusskörper (9) einen Rollbalg (13) aus elastomerem Werkstoff umfasst, der den Ausgleichsraum (11) auf der dem Traglager (2) abgewandten Seite begrenzt und im wesentlichen drucklos Volumen aufnehmend ausgebildet ist.

6. Lager nach einem der Ansprüche 1 bis 5, **dadurch gekennzeichnet, dass** das Traglager (2) auf einem Gehäuse (14) abgestützt ist.

7. Lager nach Anspruch 6, **dadurch gekennzeichnet, dass** das Traglager (2) mit dem Gehäuse (14) verschraubt und/oder durch Umbördeln des Gehäuserandes (16) mit dem Traglager (2) verbunden ist.

8. Lager nach einem der Ansprüche 1 bis 7, **dadurch gekennzeichnet, dass** in dem Gehäuse (14) eine zur Durchbrechung (6) konzentrisch angeordnete Gehäusedurchbrechung (15) angeordnet ist.

9. Hydrolager nach Anspruch 8, **dadurch gekennzeichnet, dass** die Gehäusedurchbrechung (15) als Lagermutter ausgebildet ist.

## Claims

1. Bearing (1), comprising a supporting bearing (2) and a support (3), which are connected to each other by a supporting spring (4) made of rubbery elastic material and bound a cavity (5) which is closed, on the side facing away axially from the support (3), in a liquid-tight manner by a closure body (9) made of elastomer material, wherein the supporting bearing (2) and the closure body (9) are penetrated by an aperture (6) extending substantially axially in the direction of the introduced vibrations, **characterized in that** the cavity (5) comprises a working space (10) and equalizing space (11), which spaces are filled with damping liquid and are connected to each other in a liquid-conducting manner by a damping channel (12) arranged in the supporting bearing (2).

2. Bearing according to Claim 1, **characterized in that** the aperture (6) is arranged concentrically in the support (3).

3. Bearing according to either of Claims 1 and 2, **characterized in that** the closure body (9) is at least partially composed of elastomer material.

4. Bearing according to one of Claims 1 to 3, **characterized in that** the closure body (9) is formed by an elastomer-metal composite part.

5. Bearing according to one of Claims 1 to 4, **characterized in that** the closure body (9) comprises a rolling bellows (13) of elastomer material, which bounds the equalizing space (11) on the side facing away from the supporting bearing (2) and is designed to receive volumes in a substantially unpressurized manner.

6. Bearing according to one of Claims 1 to 5, **characterized in that** the supporting bearing (2) is supported on a housing (14).

7. Bearing according to Claim 6, **characterized in that** the supporting bearing (2) is screwed to the housing (14) and/or is connected to the supporting bearing (2) by crimping of the housing edge (16).

8. Bearing according to one of Claims 1 to 7, **characterized in that** a housing aperture (15) arranged concentrically with respect to the aperture (6) is arranged in the housing (14).

9. Hydraulic bearing according to Claim 8, **characterized in that** the housing aperture (15) is designed as a bearing nut.

## Revendications

1. Palier (1), comprenant une partie de support (2) et une partie d'appui (3), qui sont connectées l'une à l'autre par un ressort de support (4) en matériau ayant l'élasticité du caoutchouc et qui délimitent une cavité (5) qui est fermée du côté opposé axialement à la partie d'appui (3) par un corps de fermeture (9) en matériau élastomère de manière étanche aux liquides, la partie de support (2) et le corps de fermeture (9) étant traversés par un orifice (6) s'étendant essentiellement axialement dans la direction des oscillations introduites, **caractérisé en ce que** la cavité (5) comprend un espace de travail (10) et un espace de compensation (11), qui sont remplis de liquide d'amortissement et qui sont connectés l'un à l'autre fluidiquement par un canal d'amortissement (12) disposé dans la partie de support (2).

2. Palier selon la revendication 1, **caractérisé en ce que** l'orifice (6) est disposé concentriquement dans la partie d'appui (3).

3. Palier selon l'une quelconque des revendications 1 ou 2, **caractérisé en ce que** le corps de fermeture (9) se compose au moins en partie de matériau élastomère.

4. Palier selon l'une quelconque des revendications 1 à 3, **caractérisé en ce que** le corps de fermeture (9) est formé par une pièce composite élastomère-métal.

5. Palier selon l'une quelconque des revendications 1 à 4, **caractérisé en ce que** le corps de fermeture (9) comprend un soufflet roulant (13) en matériau élastomère qui limite l'espace de compensation (11) du côté opposé à la partie de support (2) et qui est réalisé de manière à recevoir un volume essentiellement sans pression.

6. Palier selon l'une quelconque des revendications 1 à 5, **caractérisé en ce que** la partie de support (2) est supportée sur un boîtier (14).

7. Palier selon la revendication 6, **caractérisé en ce que** la partie de support (2) est vissée au boîtier (14) et/ou est connectée à la partie de support (2) par bordage du bord du boîtier (16).

8. Palier selon l'une quelconque des revendications 1 à 7, **caractérisé en ce qu'**un orifice de boîtier (15) disposé concentriquement par rapport à l'orifice (6) est disposé dans le boîtier (14).

9. Palier hydraulique selon la revendication 8, **caractérisé en ce que** l'orifice de boîtier (15) est réalisé sous forme d'écrou de palier.
